# EUROPEAN PATENT SPECIFICATION

(11) **EP 4 160 327 B1**
(45) Date of publication and mention of the grant of the patent: **29.01.2025**
(21) Application number: 22198183.0
(22) Date of filing: 27.09.2022
(51) Int. Cl.: G05B 19/048, B61B 12/06, B61B 1/02

(54) **A HAZARD MONITORING SYSTEM, METHOD FOR MONITORING HAZARDS AT A LIFT STATION AND COMPUTER PROGRAM PRODUCT**
GEFAHRENÜBERWACHUNGSSYSTEM, VERFAHREN ZUR ÜBERWACHUNG VON GEFAHREN AN EINER LIFTSTATION UND COMPUTERPROGRAMMPRODUKT
SYSTÈME DE SURVEILLANCE DES DANGERS, PROCÉDÉ DE SURVEILLANCE DES DANGERS À UNE STATION DE REMONTÉE MÉCANIQUE ET PRODUIT DE PROGRAMME INFORMATIQUE

(30) Priority: 30.09.2021 EP 21200107
(43) Date of publication of application: 05.04.2023
(60) Divisional application: 24219940.4
(73) Proprietor: Syrto AG, 3940 Steg VS (CH)
(72) Inventor: SCHNYDER, Remo, 3902 Glis (CH)
(74) Representative: PPR AG

(56) References cited:
- WO-A1-2021/011157
- US-A1- 2021 229 713

## Description

The present invention relates to a hazard monitoring system for monitoring a lift station according to claim 1, a method for monitoring hazards at a lift station according to claim 11 and a computer program product according to claim 15.

Winter sport resorts typically comprise a cable car or a ski lift for transporting winter sport enthusiasts up to the mountain and also down from the mountain. These cable cars or ski lifts comprise one or several lift carriages having a cabinet or a seating for transporting people, while the winter sport equipment is mostly placed outside the carriage. This way, hundreds of people and even more winter sport equipment are transported each day to the mountain and/or from the mountain in the winter sport resort. The lift stations are covered often in housings or covered in outdoor constructions. The outdoor constructions comprise typically a central main construction and a tentlike roof. The lift station and the lift carriage in an outdoor construction are exposed to environmental conditions, like wizards, rain or snow fall especially uphill on the mountain, while the lift station and the lift carriage in the housing is mostly protected from environmental issues.

In addition, in the lift station the crowd of people is waiting very close to each other and they often push to the carriage for entrance. Thus, several problems may arise in the lift station, like people falling or stumbling into the driving lane or losing winter sport equipment.

WO 2021/011157 A1 discloses a system and methods for ski lift operations comprising a digital video camera system for capturing a plurality of images of on-boarding and off-boarding operations. Said video system automatically detect, as the ski lift is operating, a potential problem situation in one or more of the on-boarding and off-boarding areas of the ski lift based on the plurality of digital images and initiates an action, as the ski lift is operating, to address the potential problem situation in one or more of the on-boarding and off-boarding areas of the ski lift, while the potential problem situation still exists.

DE 25 16 777 A1 discloses a monitoring system of an uphill ropeway-lift station using a light ray detection system in the on/off-boarding area in the lift station.

The drawback of these solutions is that they use an optical monitoring system in the on-boarding and off-boarding area. Optical monitoring systems lose their efficiency, when the air monitoring area comprises dust-like snow crystals, which cause undefined back-reflections. False alerts and/or unwanted warnings may be the result, when using optical sensors.

An aim of the present invention is to avoid at least some of the drawbacks of the prior art, in particular, to provide an improved hazard monitoring system for an outdoor lift without any optical detection/monitoring system for a safety and fault-free transport with the lift cartridge of the outdoor lift.

The invention relates to a hazard monitoring system for an outdoor lift station of an outdoor lift, in particular a ropeway-lift, configured to detect objects or people in the driving lane of the lift carriage, comprising at least one detection unit, provided in the driving lane of the lift carriage, while said at least one detection unit comprises a detection grating, a detection net and/or a detection plate, at least one weight sensor system, on which the detection unit is mounted, and which is configured to provide a (weight-)load signal dependent on a weight or force being applied to the detection unit, and an evaluation system configured to provide a warning signal based on a level of the load signal.

The main focus of the monitoring in the outdoor lift station is to detect any fault, emergency or security issue, e.g. caused by objects or obstacles or people, in or on the driving lane in which the lift carriage moves in the outdoor lift station. Said obstacle exerts a weight or a force to the weight sensor system and triggers the load signal, which is sent to the evaluation system. The driving lane in the lift station may be arranged on ground-level, or underneath ground-level using a perron for guiding the lift carriages, in the lift station from the entrance area to the exit area. The driving lane in an outdoor lift station is always exposed to environmental conditions, like a wizard or an extreme snow fall or rain. Those environmental conditions continuously change the conditions on the driving lane and the personnel at the lift station is not able to always monitor the driving lane. The detection unit placed in the driving lane or at the driving lane supports to monitor the safely and fault-free transport with the lift carriages, especially during onboarding and/or offboarding of the transported people. Said detection unit comprises a detection grating, a detection net and/or a detection plate, connected with at least one weight sensor system. Thus, the weight and/or the force applied to the detection grating, detection net or detection plate is monitored. Said detection grating or detection net comprises a mesh. Thus, small obstacles, e.g. small stones, snow or rain, may pass the mesh and will not influence the weight or force sensing. Said detection plate prevents an accumulation of obstacles beneath the weight sensor system and therefore less maintenance is needed. Said weight sensor systems detects said faults in the driving lane and sends a load signal to the evaluation system, which may react accordingly by sending a warning signal to the personnel of the lift station and/or to the control system of the lift station. The detection unit does not comprise or require any optical sensor, e.g. LIDAR, RADAR, camera. Thus, the monitoring of the driving lane is independent of the environmental conditions and works sustainable.

Preferably, said weight sensor system is directly mounted to the detection grating, detection net and/or to the detection plate and is spaced apart from the ground-level in the driving lane, using at least one support structure. Thus, the detection unit is arranged closely to the floor of the lift carriage in the lift station. Therefore, the gap between the detection unit and the base of the lift carriage is minimized to enhance the safety conditions. Preferably, the gab is less then 20cm or the gab is larger den 50cm, to avoid drag objects or people. Said weight sensor system may comprise several weight sensors or force sensors for detecting the weight and/or the force and/or the pressure on the detecting grating, the detection net and/or the detection plate. The weight load acting on the several weight/force sensors is detected and send to the evaluation system, which is connected to the several sensors for the sensor data transfer.

Preferably, the load signal is triggered at an exceeding of a weight limit and/or at a sudden change of a load or object on the detection unit, e.g. a value of a change of the load signal per time unit, which is above a threshold. Said evaluation system comprises a processor and memory. Said processor comprises a computer program and said memory comprises at least some history data and/or calibration data. Said computer program may compare the actual load signal from the weight sensor system with the default data for judging or evaluating the exceeding of a weight limit and/or at a sudden change of a load or object on the detection unit. Thus, a reliable monitoring system is provided, which enhance the safety issues in the lift station.

Preferably, the weight limit is adjustable or calibratable. Said weight limit may be specified physically by the weight sensor or force sensor itself or may be specified digitally in the computer program. The adjustment of the weight limit may be set manually once in a time period, e.g. at the beginning of a ski season, or may be auto-set depending on the environmental conditions in the lift station. For example, a continues change of the weight load of the detection unit over a long time period may occur due to snow, ice or debris, which is recognized by the evaluation system and the weight limit is adjusted accordingly. Said weight limit may be calibrated based on the used detection plate, detection net or detection grating in the detection unit and/or based on the environmental conditions. For example, the weight limit for triggering the detection unit in summer may be different to the weight limit for triggering the detection unit in winter, where heavy snow and ice sticks to the detection plate, detection net or detection grating. Thus, the weight limit is easily adaptable to different environmental conditions, preferably automatically adapted by the evaluation system.

Preferably, the warning signal is linked to a control system of the lift motion, which is configured to slowdown or stop a drive of the outdoor lift, preferably when a weight limit is exceeded. The evaluation system is connected to the control system and continuously monitoring the weight load or force on the detection unit. Several warning limits may be stored in the memory of the evaluation system and the computer program may send different control data to the control system for different warning limits. If the predefined weight limit is exceeded, the evaluation system sends a control signal to stop the driving engine/drive in the lift station. A fully automated safety control is provided.

Preferably, the warning signal provides an acoustic and/or visual warning at the lift station and/or at a mobile device of a lift-personnel. Said warning limits are linked to several warning signals based on the level of the load signal. Less critical situations may demand less critical warning signals, e.g. sending a message to a mobile device of a lift-personnel to signalize the personnel that the snow on the detection unit has to be transported away. More critical situations may demand more critical warning signals, e.g. sending an acoustic and/or visual warning at the lift station to signalize the personnel or the crowed in the lift station the upcoming slowdown or stop a drive of the outdoor lift. Said warning signal may be send to a decentral surveillance station.

An increased load signal may trigger an automatic archiving and/or transmitting of a recording from a surveillance camera in the lift station of a defined time period before (and after) the warning signal has been provided an acoustic and/or visual warning. Thus, an enhanced surveillance is provided and the stop of the engine in the lift station may be avoided.

Preferably, the hazard monitoring system comprises a heating system that is configured to melt snow or ice at the weight sensor system and/or the detection unit, that could block a triggering of the at least one detection unit. Said heating system prevents a blocking of the weight sensors and enhances the operational safety of the monitoring system. Said heating system may comprise an infrared heating element or a resistance heating element. Said heating element may be a foil, which may be placed close to the weight sensor or force sensor to improve the heating efficiency. Said heating system may heat the detection grating, net or the detecting plate to a constant temperature between 5°C to 15°C for melting the ice and snow. The heating element is preferably connected to the evaluation system, which may control the functionality of the heating element. Thus, activating the heating element may be a parameter for adjusting or calibrating the weight sensor system, especially the weight limit, of the detection unit.

Preferably, multiple separated detection units along the driving lane in the lift station are provided in the lift station. The driving lane extends from the entrance area of the lift station to the exit area of the lift station. Thus, several detection units are placed in the driving lane from the entrance area to the exit area, comprising one or several detection gratings, nets and/or detection plates. Alternatively, one detection unit extending from the entrance area to the exit area is provided, comprising one or several detection gratings, nets and/or detection plates. Said detection units may be placed next to each other, without any gap, which increases the monitoring area. However, the one detection unit or the several detection units may be placed just in the exposed areas of the driving lane in the outdoor lift station and may be separated by a gap from each other.

Preferably, the warning signal comprises a location information of the load signal triggering the detection unit. Said location information comprises coordinates of the issue or obstacle on the detecting grating, net or the detecting plate in the one or several detection units, or comprises an identification number of the detecting grating, net or the detecting plate. Thus, the location of the default or the safety issue in the driving lane is provided and the personnel may quickly react and will quickly repair the issue. Thus, the lift motion and/or the speed of the carriage may be adjusted accordingly to the location information using the evaluation system.

In particular the evaluation system is configured to provide different types of warning signal based on a location information of the lift carriage in the lift station, dependent on a distance in-between the lift carriage and the triggered detection unit. Thus, the lift motion and/or the speed of the lift carriage may be adjusted accordingly to the location information. For example, service personnel might pass the driving lane right behind a lift carriage without alarm, but the lift will be stopped if there is a detection signal close before the lift carriage in movement direction. The evaluation system can also comprise an override switching function to disable the warning signal or manually control the lift for service, maintenance, emergencies, etc.

Preferably, there is at least one additional detection unit at an ending of an on-boarding or off-boarding for the lift carriage in the lift station, configured to detect hazardous last-minute onboarding/offboarding of the lift carriage. Said additional detection unit may be arranged in the boarding area at the boarding level, above ground-level. The additional detection unit comprises a weight sensor and/or a force sensor and is connected to the evaluation system. The detected load signal may be used to provide another warning signal based on a level of the load signal.

Preferably, the detection unit is solid and walkable. Thus, the detection grating and/or the detection plate can be easily cleaned from obstacles like snow, ice, or debris., by the personnel. In another embodiment where the detection grating is configured as a flexible detection net, which might be more difficult to walk, the net can be configured to be unhinged from the sensors at its borders or be lowered to ground for maintenance.

Preferably, the detection grating has a mesh size below 50mm. Said mesh size is large enough for been safely for human and animals. Small debris, snow and other small obstacles may pass the mesh of the detection grating or net and the weight load is not influenced by these obstacles.

Preferably, the detection unit is spaced from a floor/base of the lift station. Thus, obstacles may be deposited underneath the detection grating, net and may be collected easily. Alternatively, or supplementary, the detection unit is removable for maintenance.

Preferably, the outdoor lift is configured as a gondola lift, and the lift station is a gondola station and the lift carriage is a gondola. Said gondola consists of a cabinet with at least one gondola door and a rigid gondola floor. Thus, the inside of the gondola is saved from the snow storms. Preferably, the driving lane is configured by a perron on at least one side of the gondola and in level with an entry height of the gondola, and the detection unit is preferably arranged below entry height level underneath the base of the gondola.

The invention relates to method for monitoring hazards at a lift station of an outdoor lift, in particular by a above mentioned system comprising at least the following steps:
a) providing a weight sensitive detection unit at the bottom of a driving lane of the lift carriages of the outdoor lift in the lift station;
b) sensing weight and/or forces applied to the detection unit, preferably applied to a detection grating, detention net and/or a detection plate, and providing a corresponding load signal, by at least one weight sensor system;
c) providing a warning signal based on evaluating a level of the load signal, by an evaluation system;
d) issuing an optical and/or acoustical warning based on the warning signal.

The driving lane in an outdoor lift station is always exposed to environmental conditions, like a wizard or an extreme snow fall. Those environmental conditions continuously change the conditions on the driving lane and the personnel at the lift station is not able to always monitor the driving lane. The detection unit placed in the driving lane or at the driving lane supports to monitor the safe and fault-free transport with the lift carriages, especially during onboarding and/or offboarding of the transported people.

Said weight sensor systems detects said faults in the driving lane and sends a load signal to the evaluation system may react accordingly by sending a warning signal to the personnel of the lift station and/or to the control system of the lift station. The detection unit does not comprise or require any optical sensor, e.g. LIDAR, RADAR, camera. Thus, the monitoring of the driving lane is independent of the environmental conditions and works sustainable. Optical sensors lose their efficiency, when the air in the driving lane comprises dust-like snow crystals, or when rain drops dropping from the gondola in the driving lane, or when humidity in the air fogging the sensor, which cause undefended back-reflections. False alerts and/or unwanted warnings may be the result, when using optical sensors.

Preferably, the method comprises a providing of the warning signal to a drive system of the lift station to slowing down or stopping the outdoor lift based on the load signal. The load signal is triggered at an exceeding of a weight limit and/or at a sudden change of a load or object or people on the detection unit. Said weight sensor systems detects said faults or hazards in the driving lane and sends a load signal to the evaluation system may react accordingly by sending a warning signal to the personnel of the lift station and/or to the control system of the lift station.

Preferably, heating the weight sensor system and/or the detection unit at temperatures below or close to freezing. Said heating system prevents a blocking of the weight sensors and enhances the operational safety of the monitoring system.

Preferably, said evaluation system comprises a processor and said processor compares the detected information with a stored information for judging weight and/or force applied to the detection unit. Preferably said memory has computer-executable instructions stored thereon that, when executed, cause the at least one processor to capture information of the detection unit and generate warning signal based on the load signal. Furthermore, the computer-executable instructions may address load above the weight limit and communicate with the control system of the lift station. The computer-executable instructions can be integrated to a lift control system with at least one additional signal input configured for a load signal from a detection plate or gratin according to the invention.

The above-mentioned method may be performed in the evaluation system as computer-implemented method using the processor and the memory for performing the above-mentioned computer-executable instructions based on at least some of the steps of the above-mentioned method.

The invention relates to a computer program product stored on a data storage means or provided as an electromagnetic wave, comprising program code configured for
- reading a weight information from a weight and/or force sensor at a detection unit in a driving lane of a lift carriage in a lift station, in particular through an analog or digital sensor interface of a computation device,
- calculating a warning signal on basis of a change of value in the weight and/or force information,
- providing the warning signal as an information of stopping or slowing the outdoor lift to a control system of the outdoor lift, in particular through an analog or digital output interface of the computation device, in particular provide computer-executable instructions for communication with the control system of the lift station, when executed on an evaluation system of a hazard monitoring system disclosed herein.

Further advantageous aspects of the invention are explained in the following by means of exemplary embodiments and the figures. In the drawings, it is shown in a schematic manner. Furthermore, a numeric counting within this application is just used to differ between said parts of said hazard monitoring system.

The list of reference signs as well as the technical content of the patent claims and figures are part of the disclosure. The figures are described coherently and comprehensively. Identical reference signs indicate identical components, reference signs with different indices indicate functionally identical or similar components.
- Fig. 1:: A first embodiment of a lift station with a hazard monitoring system in a schematic overview,
- Fig. 2:: the lift station according to Fig. 1 with a gondola and a detection plate and a detection grating as a detection unit in a schematic view,
- Fig. 3:: the hazard monitoring system according to Fig. 2 with a gondola and a detection unit in a front view,
- Fig. 4:: the detection grating according to Fig. 2,
- Fig. 5:: another embodiment of the lift station with a hazard monitoring system in a schematic overview,
- Fig. 6:: the hazard monitoring system according to Fig. 5 with a gondola and a first and a second detection unit in a front view, and
- Fig. 7:: a flow diagram disclosing a method for monitoring hazards at a lift station of an outdoor lift according to Fig. 1.

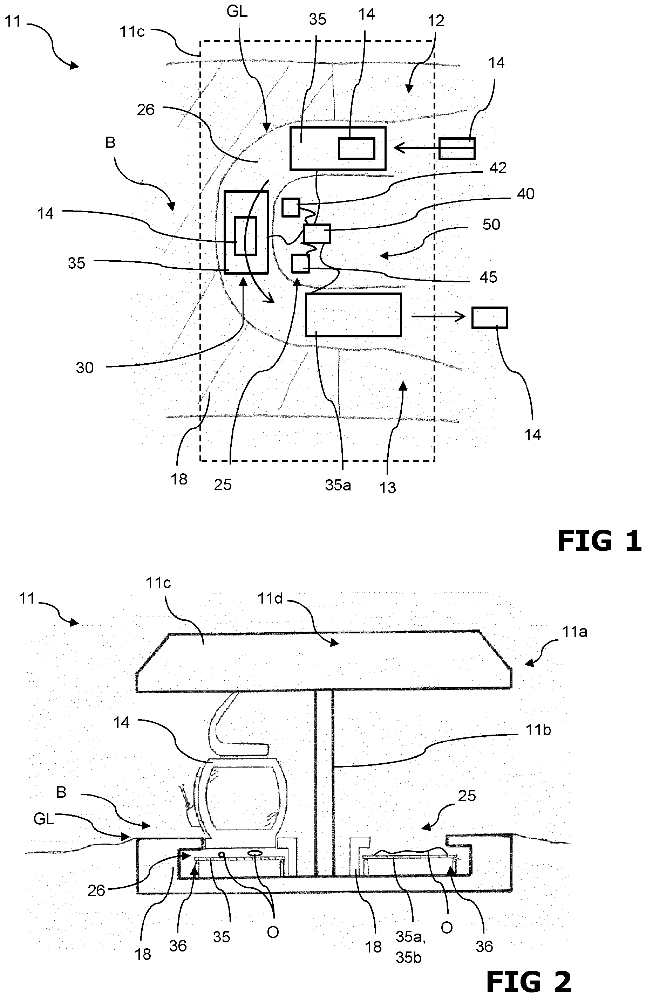

Fig. 1 to Fig. 3 disclose an outdoor lift station 11 comprising several lift carriages 14 like gondolas, which move from the entrance area 12 of the outdoor lift station 11 to the exit area 13 of the outdoor lift station 11. The outdoor lift station 11 is covered in outdoor constructions 11a. The outdoor constructions 11a comprise a central main construction 11b, comprising the drive unit or driving engine 11d of the list station 11 and an e.g. tentlike roof 11c. The lift station 11 and the lift carriage 14 in the outdoor construction 11a are exposed to environmental conditions, like wizards, rain or snow fall, in particular since at least the entrance and exit areas 12 and 13 for the lift carriages 14 is open. Said gondolas 14 in this example consist of a cabinet 15 with at least one gondola door 16 and a rigid gondola base 17. Said outdoor lift station 11 comprises a hazard monitoring system 25 configured to detect objects O in the driving lane 26 of the lift carriage 14. The driving lane 26 in the lift station 11 is the pathway along which the lift carriages 14 are traveling through the lift station 11. It is arranged underneath ground-level GL, using a perron 18 for guiding the lift carriages 14, in the lift station 11 from the entrance area 12 to the exit area 13. Said hazard monitoring system 25 comprises several detection units 30, provided in the driving lane 26 of the lift carriage 14. Said detection units 30 comprise a detection plate 35, a detection net 35b and/or a detection grating 35a, several weight sensor systems 36, on which the detection units 30 are mounted, and which are configured to provide a (weight-)load signal dependent on a weight or force being applied to the detection units 30. The detection units 30 are placed in the driving lane 25 from the entrance area to the exit area, comprising each one or more detection gratings and/or detection plates. The detection grating can either be embodied solid like a steel-grating 35a or it can be embodied flexible like a flexible net 35b, such as a braided or knotted mesh. For example, a safety-net configured of flexible cords, strings, ropes or laces e.g. made of nylon, textile, synthetic filament yarn, etc. can be used.

Furthermore, an evaluation system 40 is provided, which is configured to provide a warning signal based on a level of the load signal. Said weight sensor systems 36 detect said objects/obstacles O in the driving lane 26 and provide a load signal to the evaluation system 40, which reacts accordingly by sending a warning signal to the personnel of the lift station 11 and/or to the control system 50 of the lift station 11. The control system is configured to slowdown or stop a drive 11d of the outdoor lift 11. The evaluation system 40 is linked to the control system 50 and is continuously monitoring the weight load or force on the detection units 30. Several warning limits are stored in a memory 42 of the evaluation system 40 and the computer program 43, executed in a processor 44 of the evaluation system 40, sends different control data to the control system 50 for different warning limits. For example, if the predefined weight limit is exceeded, the evaluation system 40 sends a control signal to stop the driving engine 11d in the lift station 11.

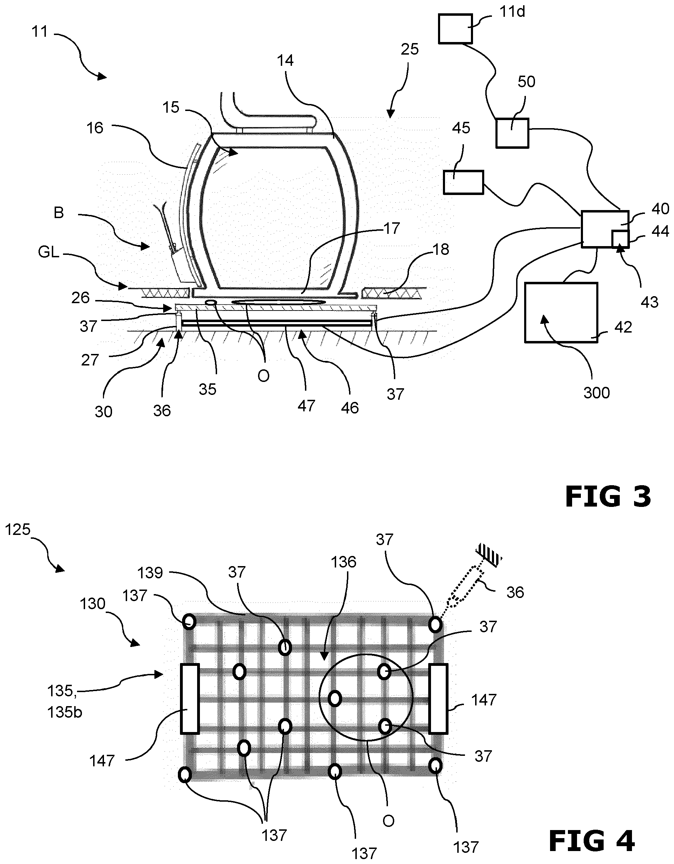

Fig. 3 discloses a detailed view to the on/off-boarding area B in the lift station 11. The evaluation system 40 comprises the processor 44 and is connected to the control system 50 of the driving engine 11d, the memory 42 and the detection plate 35 of the detection unit 30. The detection plate 35 is solid and walkable, e.g. it can be embodied as a tread plate arranged on a weight sensing systems 36.

Said obstacle O, e.g. an item or person fallen into the driving lane 26 of the gondola 14, exerts a weight or a force to the weight sensor system 36 and triggers the load signal, which is sent to the evaluation system 40. The weight sensor system 36 is directly mounted to the detection plate 35 and is spaced apart from the ground-level GL in the driving lane 26, using the support structures 27. Said weight sensor system 36 comprises several weight sensors 37 for detecting the weight and/or the force and/or the pressure on the detection plate 35. The weight load acting on the several weight 37 is detected and send to the evaluation system 40, which is connected to the several weight sensors 37 for sensor data transfer. For example, the weight sensors 37 can be embodied as a pressure sensitive switch, an endstop-, limit switch or distance-sensor under a spring-mounted grating, an inductive or capacitive proximity switch or sensor, a scales-sensor, a weight sensor, a pressure sensor, etc. or another sensor configured and arranged to provide an analog or digital signal dependent on wight or force applied to the detection plate or detection grating, preferably in direction of gravity.

The load signal is triggered at an exceeding of a weight limit and/or at a sudden change of a load or object O on the detection plate 35 of the detection unit 30. Said memory 42 comprises at least some history data and/or calibration data. Said computer program 43 compares the actual load signal from the weight sensor system 36 with the default data for judging or evaluating the exceeding of a weight limit and/or at a sudden change (e.g. exceeding a certain weight-change per time limit) of a load or object on the detection unit 30.

An increased load signal may trigger an automatic archiving of a recording from a surveillance camera in the lift station 11 in a defined time period before (and after) the warning signal has been provided and/or an acoustic and/or visual warning to passengers and/or operators (not shown).

The warning signal provides an acoustic and/or visual warning at the lift station 11, which is shown on a display 45 and/or an acoustic signal generator and/or is shown at a mobile device of a lift-personnel (not shown). Said warning limits are linked to several warning signals based on the level of the load signal. The warning signal comprises a location information of the load signal triggering the detection unit 30. Said location information comprises an identification number of the detecting plate 35.

In addition, an embodiment of the hazard monitoring system 25 comprises a heating system 46, which is configured to melt snow or ice at the weight sensor systems 36 and/or the detection plate 25. Said heating system 46 prevents a blocking of the weight sensors 37. Said heating system 46 comprises a resistance heating element 47. Said heating system 46 heats the detecting plate 35 to a constant temperature between 5°C to 15°C for melting the ice and snow. The heating element 47 of the heating system 46 is connected to the evaluation system 40, which is configured to control the functionality of the heating element 47, e.g. dependent on environmental conditions.

Fig. 4 discloses another embodiment of a hazard monitoring system 125. The hazard monitoring system 125 comprises the structural and functional means and arrangements described in the hazard monitoring system 25 of the Fig. 1 to Fig. 3. However, the detection unit 130 comprises a detection grating 135, which may be also used in the hazard monitoring system 25 of the Fig. 1 to Fig. 3, instead of one of the above-described detection units 30.

Said detection grating 135 can be a step grating or an open mesh flooring, comprising a mesh 139 having a mesh size below 50mm and is solid and walkable. Thus, small obstacles, e.g. small stones, snow, rain, etc. pass the mesh 139 and will not influence the weight or force sensing. The detection grating 135 is spaced from a floor of the lift station 11, as shown in Fig. 3. The detection grating 135 comprises a weight sensor system 136 comprising several weight or force sensors 137, which are connected to the evaluation system 40. The weight sensor system 136 is configured to provide a (weight-)load signal dependent on a weight or force being applied to the detection grating 135. The load signal can be one or more discrete on-off signals, but is preferably an analog measurement quantity which can be evaluated by a numerical comparison. The evaluation system 40 is provided, which is configured to provide a warning signal based on a level of the load signal. The warning signal comprises a location information of the load signal triggering the detection grating 135. Said location information comprises coordinates of the issue in the surrounding of the detecting sensors 137 caused by the obstacles O in this mesh area. The evaluation system 40 is configured to provide different types of warning signal based on a location information and/or a location information of the lift carriage 14 in the lift station 11, e.g. dependent on a distance in-between the lift carriage 14 and the triggered coordinates on the detecting grating 135.

In addition, the hazard monitoring system 125 comprises a heating system 146, which is configured to melt snow or ice at the weight sensor system 136. Said heating system 46 prevents a blocking of the sensors 137. Said heating system 146 comprises infrared heating element 147. Said heating element 147 may be a foil 148, which may be placed close to the weight sensor 137 to improve the heating efficiency. Said heating system 146 heats the detection grating 136 to a constant temperature between 5°C to 15°C for melting ice and snow. The heating element 147 is connected to the evaluation system 40, which controls the functionality of the heating element 147.

In an embodiment, the shown detection unit 130 can be configured with a flexible detection net 135b as detection grating. For example, a safety net consisting of woven, e.g. polypropylene or nylon filament yarn or another a highly tearproof and stable synthetic fibre. Preferably by a knotless weave, for keeping its shape, but alternatively also knotted or braided. An additional rope can be sewn/linked to the border mesh. The border gives the net a neat outer edge on all sides and simultaneously ensures stable, stress-resistant anchorage points. Preferably the net is equipped with multiple thimbles at its border configured as anchorage points. The border of the net or its thimbles can for example be mechanically linked to least one weight sensor system 36, for example, a force-, load- or wight-sensor, here exemplary shown in broken lines in one of the corners for such an embodiment comprising a net. For example, such an embodied can be configured with at least one pull-sensor or pull-switch linking the net to the lift-station. For example, the border of the net or thimbles of the net are hooked into a Pull-to-Unlock Sensor, a Pull Cord Safety Switch or a pull force sensor. Under normal conditions of an empty net, the switch is not trigger, resp. a threshold of the sensor value is not reached. If there is an object in the net, its weight will trigger at least one switch or sensor at the net, as load signal and the warning signal is provided, the thimbles hooked into Pull-to-Unlock Sensor, Pull Cord Safety Switch or pull force sensor.

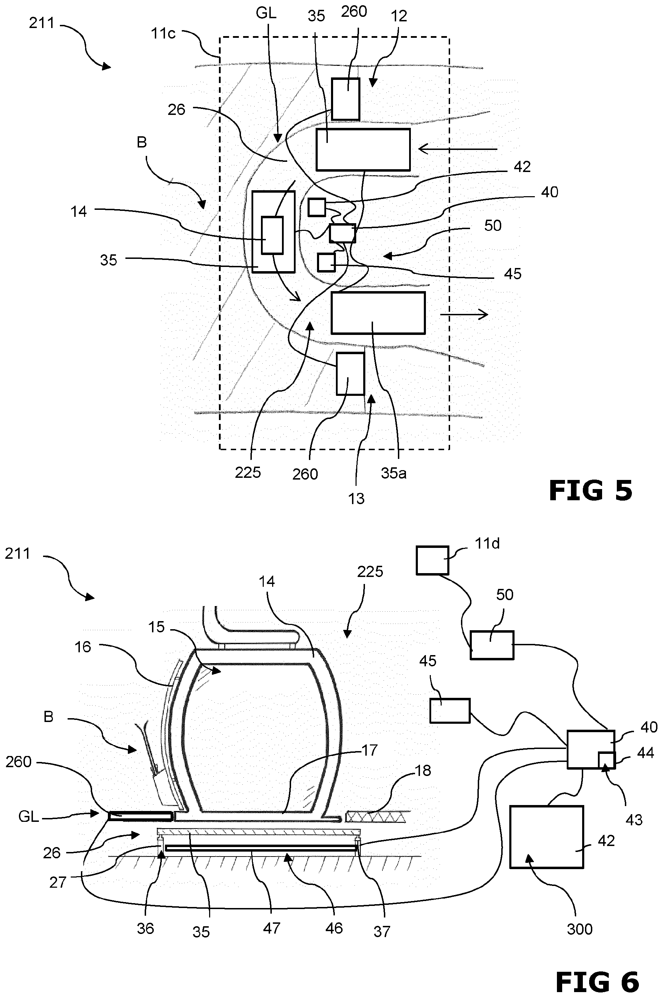

Fig. 5 and Fig. 6 discloses another embodiment of a hazard monitoring system 225 in an outdoor lift station 211. The hazard monitoring system 225 comprises the structural and functional means and arrangements described in the hazard monitoring system 25 of the Fig. 1 to Fig. 3. However, there are additional weight sensor systems 260 at an ending of an on-boarding or off-boarding B for the lift carriage 14 in the lift station 11, configured to detect hazardous last-minute onboarding/offboarding of the lift carriage 14. Said additional detection unit 260 are arranged in the boarding area B at the boarding level, above ground-level GL. The additional detection units 260 comprise a weight sensor and/or a force sensor and are connected to the evaluation system 40. The detected load signal is used to provide another warning signal based on a level of the load signal, in particular as described above.

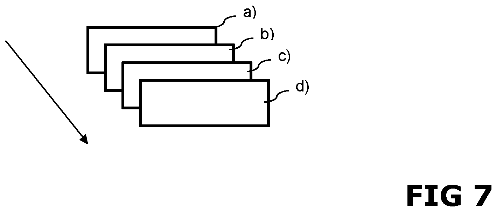

Furthermore, a method for monitoring hazards at a lift station of an outdoor lift, in particular by a above mentioned system, is disclosed in Fig. 7, comprising at least the following steps (see also Fig. 1 to Fig 3):
a) providing a weight sensitive detection unit 30 at the bottom of a driving lane 26 of the lift carriages 14 of the outdoor lift 11 in the lift station 11;
b) sensing weight and/or forces applied to a detection plate 35 or detection grating 35a or detection net 35b of the detection unit 30 and providing a corresponding load signal, by at least one weight sensor system 36;
c) providing a warning signal based on evaluating a level of the load signal, by an evaluation system 40, e.g. with a comparing of the load signal to at least one constant or variable threshold;
d) issuing an optical and/or acoustical warning based on the warning signal, e.g. by driving an acoustic or optical emitter.

Said weight sensor systems 36 detects said objects/obstacles O in the driving lane 26 and sends a load signal to the evaluation system 40, which reacts accordingly by sending a warning signal to the personnel of the lift station and/or to the control system of the lift station 11.

Furthermore, after step d) the warning signal is provided to a drive system 11d of the lift station 11 to slowing down or stopping the outdoor lift based on the load signal. The load signal is triggered at an exceeding of a weight limit and/or at a sudden change of a load or object O on the detection plate 35. Said weight sensor systems 36 detects said objects/obstacles O in the driving lane 26.

Before step b) the weight sensor system 36 and/or the detection plate 35 is heated at temperatures below or close to freezing.

Said evaluation system comprises a processor and before step d) said processor compares the detected information with a stored information for judging weight and/or force applied to the detection unit. Said memory has computer-executable instructions stored thereon that, when executed, causes the at least one processor to capture information of the detection unit 30 and generates warning signal based on the load signal. Furthermore, the computer-executable instructions address load above the weight limit and communicates with the control system 50 of the lift station 11.

The above-mentioned method may be performed in the evaluation system 40 as computer-implemented method using the processor 42 and the memory 43 for performing the above-mentioned computer-executable instructions based on at least some of the steps of the above-mentioned method.

In addition, a computer program product 300 is disclosed, stored on a data storage means, like a memory 43, or provided as an electromagnetic wave via a wired or wireless data communication system, comprising program code configured for
- reading a weight information from a weight and/or force sensor 37 at a detection plate 35 in the driving lane 26 of a lift carriage 14 in a lift station 11, in particular through an analog or digital sensor interface of a computation device,
- calculating a warning signal on basis of a change of value in the weight and/or force information,
- providing the warning signal as an information of stopping or slowing the outdoor lift to a control system of the outdoor lift 11, in particular through an analog or digital output interface of the computation device, in particular provide computer-executable instructions for communication with the control system 50 of the lift station 11, preferably executed on an evaluation system 40 of a hazard monitoring system disclosed herein.

### Reference list

- 11: (outdoor) lift station
- 11a: outdoor construction
- 11b: central main construction
- 11c: tentlike roof
- 11d: driving engine/ drive
- 12: entrance area of 11
- 13: exit area of 11
- 14: Gondola / lift carriage
- 15: cabinet of 14
- 16: gondola door
- 17: gondola base
- 18: perron
- 25: hazard monitoring system
- 26: driving lane
- 27: support structures
- 30: detection units
- 35: detection plate
- 35a: detection grating
- 35b: detection net
- 36: weight sensor systems
- 37: weight/force sensor
- 40: evaluation system
- 42: memory
- 43: computer program
- 44: processor
- 45: display
- 46: heating system
- 47: heating elements
- 50: control system
- 125: hazard monitoring system
- 130: detection units
- 135: detection grating
- 135b: detection net
- 136: weight sensor system
- 137: weight/force sensors
- 139: mesh of 135
- 146: heating system
- 147: heating element

- 211: outdoor lift station
- 225: hazard monitoring system
- 260: detection units
- 300: computer program product

- B: on/off-boarding area in 11
- GL: floor/ground-level in 11
- O: obstacles/objects

## Claims

1. A hazard monitoring system (25; 125; 225) for an outdoor lift station (11; 211) of an outdoor lift, in particular a ropeway-lift, configured to detect objects (O) in a driving lane (26) of a lift carriage (14), comprising,
- at least one detection unit (30; 130), provided in the driving lane (26) of the lift carriage (14), while said at least one detection unit (30; 130) com prises a detection grating (35a; 135), a detection net (35b) and/or a detection plate (35),
- at least one weight sensor system (36; 136), on which the at least one detection unit (30; 130) is mounted, and which is configured to provide a load signal, in particular a weight-load signal, dependent on a weight or force being applied to the at least one detection unit (30; 130)
- an evaluation system (40) configured to provide a warning signal based on a level of the load signal.

2. Hazard monitoring system according to claim 1, **characterized in that** the load signal is triggered at an exceeding of a weight limit and/or at a sudden change of a load or object on the at least one detection unit (30; 130), preferably wherein the weight limit is adjustable/ calibratable.

3. Hazard monitoring system according to any of the previous claims, **characterized in that** the warning signal is linked to a control system (50) of the lift motion, which is configured to slowdown or stop a drive (11d) of the outdoor lift (11), preferably when a weight limit is exceeded.

4. Hazard monitoring system according to any of the previous claims, **characterized in that** the warning signal provides an acoustic and/or visual warning at the lift station and/or at a mobile device of a lift-personnel.

5. Hazard monitoring system according to any of the previous claims, **characterized in that** the hazard monitoring system (25; 125; 225) comprises a heating system (46; 146) that is configured to melt snow or ice at the weight sensor system (36; 136) and/or the at least one detection unit (30; 130), that is configured to block a triggering of the at least one detection unit (30; 130).

6. Hazard monitoring system according to any of the previous claims, **characterized in that** multiple separated detection units (30; 130) along the driving lane (26) in the lift station (11) are provided, preferably wherein the warning signal comprises a location information of the load signal triggering the detection units (30; 130),
in particular wherein the evaluation system (40) is provided with a location information of the lift carriage (14) in the lift station (11) and is configured to provide different types of warning signal dependent on a distance in-between the lift carriage (14) and the triggered detection units (30; 130).

7. Hazard monitoring system according to claim 6, **characterized in that** there is at least one additional detection unit (30; 130) at an ending of an on-boarding or off-boarding (B) for the lift carriage (14) in the lift station (11), configured to detect hazardous last-minute onboarding/offboarding of the lift carriage (14).

8. Hazard monitoring system according to any of the previous claims, **characterized in that** the at least one detection unit (30; 130) is solid and walkable and preferably the detection grating (35a; 135) has a mesh size below 50mm, the at least one detection unit (30; 130) is spaced from a floor (GL) of the lift station (11) and/or the at least one detection unit (30; 130) is removable for maintenance, or
the at least one detection unit (30; 130) is flexible with a braided or knotted detection net (35b), preferably having a mesh size below 50mm and/or being removable for maintenance.

9. Hazard monitoring system according to any of the previous claims, **characterized in that** the outdoor lift is configured as a gondola lift, and the lift station is a gondola-station and the lift carriage is a gondola.

10. Hazard monitoring system according to claim 9, **characterized in that** the driving lane (26) is configured by a perron on at least one side of the gondola (14) and in level with an entry height of the gondola (14), and the at least one detection unit (30; 130) is arranged below entry height level underneath the base of the gondola (17).

11. Method for monitoring hazards at a lift station (25; 125; 225) of an outdoor lift (11), in particular by a system according to one of the claims 1 to 10, comprising the following steps:
a) providing a weight sensitive detection unit (30; 130) at the bottom of a driving lane (26) of lift carriages (14) of the outdoor lift in the lift station (11);
b) sensing weight and/or forces applied to the weight sensitive detection unit (30; 130) and providing a corresponding load signal, by at least one weight sensor system (36; 136) on which the weight sensitive detection unit (30; 130) is mounted;
c) providing a warning signal based on evaluating a level of the load signal, by an evaluation system (40);
d) issuing an optical and/or acoustical warning based on the warning signal.

12. Method for monitoring hazards according to claim 11,
**characterized by** providing the warning signal to a drive engine (11d) of the lift station (11) to slow down or stop the outdoor lift based on the load signal.

13. Method for monitoring hazards according to claim 11 or 12, **characterized by** heating the at least one weight sensor system (36; 136) and/or the weight sensitive detection unit (30; 130) at temperatures below or close to freezing.

14. Method for monitoring hazards according to any of claims 11 to 13, **characterized in that** said evaluation system (40) comprises a processor (44) and said processor (44) compares a detected information with a stored information for judging weight and/or force applied to the weight sensitive detection unit (30; 130).

15. Computer program product (300), in particular stored on a data storage means or provided as an electromagnetic wave,
comprising program code with computer-executable instructions, which when executed by a computation device is configured to cause the computation device to
- read a weight information from a weight and/or force sensor (37; 137) at a detection units (30; 130) in a driving lane (26) of a lift carriage (14) in a lift station (11), in particular through an analog or digital sensor interface of the computation device,
- calculate a warning signal on basis of a change of value in the weight and/or force information,
- provide the warning signal as an information of stopping or slowing the outdoor lift to a control system (50) of the outdoor lift (11), in particular through an analog or digital output interface of the computation device,
in particular when executed on an evaluation system of a hazard monitoring system according to one of the claims 1 to 10.

## Patentansprüche

1. Gefahrenüberwachungssystem (25; 125; 225) für eine im Freien befindliche Liftstation (11; 211) eines im Freien befindlichen Lifts, insbesondere eines Seilbahnlifts, welches derart konfiguriert ist, Objekte (O) in einer Fahrspur (26) eines Lifttransportwagens (14) zu erfassen, umfassend:
- mindestens eine Erfassungseinheit (30; 130), die in der Fahrspur (26) des Lifttransportwagens (14) bereitgestellt ist, wobei die mindestens eine Erfassungseinheit (30; 130) ein Erfassungsgitter (35a; 135), ein Erfassungsnetz (35b) und/oder eine Erfassungsplatte (35) umfasst,
- mindestens ein Gewichtssensorsystem (36; 136), an dem die mindestens eine Erfassungseinheit (30; 130) angebracht ist und welches dazu ausgelegt ist, ein Lastsignal, insbesondere ein Gewichts-Lastsignal, in Abhängigkeit von einem auf die mindestens eine Erfassungseinheit (30; 130) einwirkenden Gewicht oder einer einwirkenden Kraft auszugeben
- ein Auswertesystem (40), das derart konfiguriert ist, dass es basierend auf einem Wert des Lastsignals ein Warnsignal bereitstellt.

2. Gefahrenüberwachungssystem nach Anspruch 1, **dadurch gekennzeichnet, dass** das Lastsignal bei Überschreiten einer Gewichtsgrenze ausgelöst wird und/oder bei einer plötzlichen Änderung einer Last oder eines Objekts an der mindestens einen Erfassungseinheit (30; 130), wobei vorzugsweise die Gewichtsgrenze einstellbar/kalibrierbar ist.

3. Gefahrenüberwachungssystem nach einem der vorstehenden Ansprüche, **dadurch gekennzeichnet, dass** das Warnsignal mit einem Steuerungssystem (50) der Liftbewegung verbunden ist, das derart konfiguriert ist, dass es einen Antrieb (11d) des im Freien befindlichen Lifts (11) verlangsamt oder anhält, vorzugsweise wenn eine Gewichtsgrenze überschritten wird.

4. Gefahrenüberwachungssystem nach einem der vorhergehenden Ansprüche, **dadurch gekennzeichnet, dass** das Warnsignal eine akustische und/oder visuelle Warnung an der Liftstation und/oder an einem mobilen Gerät des Liftpersonals bereitstellt.

5. Gefahrenüberwachungssystem nach einem der vorstehenden Ansprüche, **dadurch gekennzeichnet, dass** das Gefahrenüberwachungssystem (25; 125; 225) ein Heizsystem (46; 146) umfasst, das dazu konfiguriert ist, Schnee oder Eis an dem Gewichtssensorsystem (36; 136) und/oder der mindestens einen Erfassungseinheit (30; 130) zu schmelzen, das dazu konfiguriert ist, welcher Schnee oder welches Eis gestaltet ist, ein Auslösen der mindestens einen Erfassungseinheit (30; 130) zu blockieren.

6. Gefahrenüberwachungssystem nach einem der vorstehenden Ansprüche, **dadurch gekennzeichnet, dass** mehrere getrennte Erfassungseinheiten (30; 130) entlang der Fahrspur (26) in der Liftstation (11) bereitgestellt sind,
vorzugsweise wobei das Warnsignal eine Ortsinformation des die Erfassungseinheiten (30; 130) auslösenden Lastsignals umfasst,
insbesondere wobei das Auswertungssystem (40) mit einer Ortsinformation des Lifttransportwagens (14) in der Liftstation (11) versehen und so konfiguriert ist, dass es in Abhängigkeit von einem Abstand zwischen dem Lifttransportwagen (14) und den ausgelösten Erfassungseinheiten (30; 130) verschiedene Arten von Warnsignalen bereitstellt.

7. Gefahrenüberwachungssystem nach Anspruch 6, **dadurch gekennzeichnet, dass** es mindestens eine zusätzliche Erfassungseinheit (30; 130) an einem Ende eines Einstiegs- oder Ausstiegsorts (B) für den Lifttransportwagen (14) in der Liftstation (11) gibt, die so konfiguriert ist, dass sie ein gefährliches Last-Minute Ein- und/oder Aussteigen beim Lifttransportwagens (14) erkennt.

8. Gefahrenüberwachungssystem nach einem der vorstehenden Ansprüche, **dadurch gekennzeichnet, dass** die mindestens eine Erfassungseinheit (30; 130) solide und begehbar ist, und vorzugsweise das Erfassungsgitter (35a; 135) eine Maschenweite von weniger als 50 mm aufweist, die mindestens eine Erfassungseinheit (30; 130) von einem Boden (GL ) der Liftstation (11) beabstandet ist und/oder die mindestens eine Erfassungseinheit (30; 130) zu Wartungszwecken entfernbar ist, oder die mindestens eine Erfassungseinheit (30; 130) flexibel ist und ein geflochtenes oder geknotetes Erfassungsnetz (35b) aufweist, das vorzugsweise eine Maschenweite von weniger als 50 mm aufweist und/oder zur Wartung abnehmbar ist.

9. Gefahrenüberwachungssystem nach einem der vorherigen Ansprüche, **dadurch gekennzeichnet, dass** der im Freien befindliche Lift als ein Gondellift konfiguriert ist, und die Liftstation eine Gondelstation ist und der Lifttransportwagen eine Gondel ist.

10. Gefahrenüberwachungssystem nach Anspruch 9, **dadurch gekennzeichnet, dass** die Fahrspur (26) durch eine Plattform an mindestens einer Seite der Gondel (14) und auf dem Niveau einer Einstiegshöhe der Gondel (14) ausgebildet ist, und die mindestens eine Erfassungseinheit (30; 130) unterhalb des Niveaus der Einstiegshöhe unter dem Boden der Gondel (17) angeordnet ist.

11. Verfahren zum Überwachen von Gefahren an einer Liftstation (25; 125; 225) eines im Freien befindlichen Lifts (11), insbesondere durch ein System nach einem der Ansprüche 1 bis 10, das die folgenden Schritte umfasst:
a) Bereitstellen einer gewichtsempfindlichen Erfassungseinheit (30; 130) an dem Boden einer Fahrspur (26) von Lifttransportwagen (14) des im Freien befindlichen Lifts in der Liftstation (11);
b) Erfassen von Gewicht und/oder Kräften, die auf die gewichtsempfindliche Erfassungseinheit (30; 130) einwirken, und Bereitstellen eines entsprechenden Lastsignals durch mindestens ein Gewichtssensorsystem (36; 136), an dem die gewichtsempfindliche Erfassungseinheit (30; 130) angebracht ist;
c) Bereitstellen eines Warnsignals basierend auf dem Bewerten eines Niveaus des Lastsignals durch ein Bewertungssystem (40);
d) Ausgeben einer optischen und/oder akustischen Warnung basierend auf dem Warnsignal.

12. Verfahren zum Überwachen von Gefahren nach Anspruch 11, **gekennzeichnet durch** Bereitstellen des Warnsignals an einen Antriebsmotor (11d) der Liftstation (11), um den im Freien befindlichen Lift auf der Grundlage des Lastsignals zu verlangsamen oder anzuhalten.

13. Verfahren zum Überwachen von Gefahren nach Anspruch 11 oder 12, **gekennzeichnet durch** Beheizen des mindestens einen Gewichtssensorsystems (36; 136) und/oder der gewichtsempfindlichen Erfassungseinheit (30; 130) bei Temperaturen unter oder nahe dem Gefrierpunkt.

14. Verfahren zum Überwachen von Gefahren nach einem der Ansprüche 11 bis 13, **dadurch gekennzeichnet, dass** das Auswertungssystem (40) einen Prozessor (44) umfasst und der Prozessor (44) eine erfasste Information mit einer gespeicherten Information vergleicht, um das Gewicht und/oder die Kraft zu beurteilen, die an der gewichtsempfindlichen Erfassungseinheit (30; 130) angelegt ist.

15. Computerprogrammprodukt (300), insbesondere auf einem Datenträger gespeichert oder als elektromagnetische Welle bereitgestellt,
mit einem Programmcode mit computerausführbaren Anweisungen, das bei Ausführung durch eine Recheneinrichtung so konfiguriert ist, dass es die Recheneinrichtung veranlasst,
- eine Gewichtsinformation von einem Gewichts- und/oder Kraftsensor (37; 137) an einer Erfassungseinheit (30; 130) in einer Fahrspur (26) eines Lifttransportwagens (14) in einer Liftstation (11) einzulesen, insbesondere über eine analoge oder digitale Sensorschnittstelle der Recheneinrichtung,
- auf der Grundlage einer Wertänderung der Gewichts- und/oder Kraftinformationen ein Warnsignal berechnen,
- das Warnsignal als eine Information zum Anhalten oder Verlangsamen des im Freien befindlichen Lifts an ein Steuersystem (50) des im Freien befindlichen Lifts (11) bereitzustellen, insbesondere über eine analoge oder digitale Ausgangsschnittstelle der Rechenvorrichtung,
insbesondere wenn dies auf einem Auswertungssystem eines Gefahrenüberwachungssystems nach einem der Ansprüche 1 bis 10 erfolgt.

## Revendications

1. Système de surveillance des risques (25 ; 125 ; 225) destiné à une station de remontée mécanique extérieure (11 ; 211) d'une remontée mécanique extérieure, en particulier d'une remontée à câble, configuré pour détecter des objets (O) dans une voie de circulation (26) d'une cabine de remontée mécanique (14), comprenant
- au moins une unité de détection (30 ; 130), prévue dans la voie de circulation (26) de la cabine de remontée mécanique (14), tandis que ladite au moins une unité de détection (30 ; 130) comprend une grille de détection (35a ; 135), un réseau de détection (35b) et/ou une plaque de détection (35),
- au moins un système de détection de poids (36 ; 136), sur lequel est montée au moins une unité de détection (30 ; 130), et qui est conçu pour émettre un signal de charge, en particulier un signal de poids-charge, en fonction d'un poids ou d'une force appliquée à l'au moins une unité de détection (30 ; 130)
- un système d'évaluation (40) configuré pour émettre un signal d'avertissement basé sur un niveau du signal de charge.

2. Système de surveillance des risques selon la revendication 1, **caractérisé par le fait que** le signal de charge est déclenché lors d'un dépassement d'une limite de poids et/ou lors d'un changement brusque d'une charge ou d'un objet sur l'au moins une unité de détection (30 ; 130), de préférence lorsque la limite de poids est réglable/calibrable.

3. Système de surveillance des risques selon l'une quelconque des revendications précédentes, **caractérisé en ce que** le signal d'avertissement est relié à un système de commande (50) du mouvement de levage, qui est configuré pour ralentir ou arrêter un entraînement (11d) de la remontée mécanique extérieure (11), de préférence si une limite de poids est dépassée.

4. Système de surveillance des risques selon l'une quelconque des revendications précédentes, **caractérisé en ce que** le signal d'avertissement fournit un avertissement acoustique et/ou visuel à la station de remontée et/ou au niveau d'un dispositif mobile d'un personnel de levage.

5. Système de surveillance des risques selon l'une quelconque des revendications précédentes, **caractérisé en ce que** le système de surveillance des risques (25 ; 125 ; 225) comprend un système de chauffage (46 ; 146) qui est conçu pour faire fondre de la neige ou de la glace au niveau du système de détection de poids (36 ; 136) et/ou de l'au moins une unité de détection (30 ; 130), qui est conçu pour bloquer un déclenchement de l'au moins une unité de détection (30 ; 130).

6. Système de surveillance des risques selon l'une des revendications précédentes, **caractérisé en ce que** plusieurs unités de détection séparées (30 ; 130) sont prévues le long de la voie de circulation (26) dans la station de remontée (11), le signal d'avertissement comprenant une information de localisation du signal de charge déclenchant les unités de détection (30 ; 130),
en particulier le système d'évaluation (40) étant pourvu d'une information de localisation de la cabine de remontée mécanique (14) dans la station de remontée (11) et étant configuré pour fournir différents types de signaux d'avertissement en fonction d'une distance entre la cabine de remontée mécanique (14) et les unités de détection déclenchées (30 ; 130).

7. Système de surveillance des risques selon la revendication 6, **caractérisé en ce qu'**au moins une unité de détection supplémentaire (30 ; 130) est prévue à une extrémité d'un point d'embarquement ou de débarquement (B) pour la cabine de remontée mécanique (14) dans la station de remontée (11), et est configurée pour détecter un embarquement ou un débarquement risqué de dernière minute dans la cabine de remontée mécanique (14).

8. Système de surveillance des risques selon l'une quelconque des revendications précédentes, **caractérisé en ce que** l'au moins une unité de détection (30 ; 130) est solide et praticable et que la grille de détection (35a; 135) a de préférence un maillage inférieur à 50 mm, l'au moins une unité de détection (30 ; 130) étant espacée d'un plancher (GL) de la station de remontée (11) et/ou de l'au moins une unité de détection (30 ; 130) étant amovible pour la maintenance, ou que l'au moins une unité de détection (30 ; 130) est flexible avec un réseau de détection tressé ou noué (35b), présentant de préférence une dimension de maille inférieure à 50 mm et/ou étant amovible pour la maintenance.

9. Système de surveillance des risques selon l'une quelconque des revendications précédentes, **caractérisé en ce que** la cabine de remontée extérieure est configurée comme une télécabine, et que la station de remontée est une station de cabines et que le chariot remonté est une cabine.

10. Système de surveillance des risques selon la revendication 9, **caractérisé en ce que** la voie de circulation (26) est configurée par un perron sur au moins un côté de la cabine (14) et se trouve au niveau d'une hauteur d'entrée de la cabine (14) et que l'au moins une unité de détection (30 ; 130) est placée sous le niveau de hauteur de l'entrée, sous la base de la cabine (17).

11. Procédé de surveillance des risques au niveau d'une station d'ascenseur (25 ; 125 ; 225) d'une remontée extérieure (11), en particulier par un système selon l'une des revendications 1 à 10, comprenant les étapes suivantes :
a) fourniture d'une unité de détection sensible au poids (30 ; 130) au bas d'une voie de circulation (26) des cabines de remontées mécaniques (14) de la remontée mécanique extérieure dans la station de remontée mécanique (11) ;
b) détection du poids et/ou des forces appliqués à l'unité sensible au poids (30 ; 130) ; et chargement d'un signal, par au moins un système de détection de poids (36 ; 136) sur lequel l'unité de détection sensible au poids (30 ; 130) est montée ;
c) émission d'un signal d'avertissement basé sur l'évaluation d'un niveau du signal de charge, par un système d'évaluation (40) ;
d) émission d'un avertissement optique et/ou acoustique basé sur le signal d'avertissement.

12. Procédé de surveillance selon la revendication 11, **caractérisé par** l'émission du signal d'avertissement vers un moteur d'entraînement (11d) de la station de remontée (11) pour ralentir ou arrêter la remontée mécanique extérieure sur la base du signal de charge.

13. Procédé de surveillance des risques selon la revendication 11 ou 12, **caractérisé par** le chauffage de l'au moins un système capteur de poids (36 ; 136) et/ou de l'unité de détection sensible au poids (30 ; 130) à des températures inférieures ou proches du point de congélation.

14. Procédé de surveillance des risques selon l'une quelconque des revendications 11 à 13, **caractérisé en ce que** ledit système d'évaluation (40) comprend un processeur (44) et que ledit processeur (44) compare une information détectée avec une information mémorisée pour évaluer le poids et/ou la force appliqués à l'unité de détection sensible au poids (30 ; 130).

15. Produit de programme informatique (300), en particulier stocké sur un moyen de stockage de données ou fourni sous forme d'onde électromagnétique, comprenant un code de programme avec des instructions exécutables par ordinateur, qui, lorsqu'il est exécuté par un dispositif de calcul, est configuré pour amener le dispositif de calcul à
- lire une information de poids à partir d'un capteur de poids et/ou de force (37 ; 137) au niveau d'unités de détection (30 ; 130) dans une voie de circulation (26) d'une cabine de remontée mécanique (14) dans une station de remontée (11), en particulier par l'intermédiaire d'une interface de capteur analogique ou numérique du dispositif de calcul,
- calculer un signal d'avertissement sur la base d'un changement de valeur dans l'information de poids et/ou de force,
- émettre le signal d'avertissement en tant qu'information d'arrêt ou de ralentissement de la remontée mécanique extérieure vers un système de commande (50) de la remontée mécanique extérieure (11), en particulier par l'intermédiaire d'une interface de sortie analogique ou numérique du dispositif de calcul, en particulier lorsqu'il est exécuté sur un système d'évaluation d'un système de surveillance de risques selon l'une des revendications 1 à 10.
